## Europäisches Patentamt
## European Patent Office
## Office européen des brevets

(19)

(11) Publication number: **0 015 150**
**B1**

(12) **EUROPEAN PATENT SPECIFICATION**

(45) Date of publication of patent specification: **13.04.83**

(51) Int. Cl.³: **H 05 B 6/02, F 16 L 53/00**

(21) Application number: **80300503.2**

(22) Date of filing: **21.02.80**

(54) Pipelines heated by skin-effect current.

(30) Priority: **21.02.79 JP 19432/79**

(43) Date of publication of application:
**03.09.80 Bulletin 80/18**

(45) Publication of the grant of the patent:
**13.04.83 Bulletin 83/15**

(84) Designated Contracting States:
**DE GB IT**

(56) References cited:
**FR - A - 1 445 883**
**FR - A - 2 037 832**
**FR - A - 2 039 949**
**US - A - 3 777 117**

(73) Proprietor: **Chisso Engineering CO. LTD.**
**7-3, Marunouchi 2-chome**
**Chiyodaku Tokyo (JP)**

(72) Inventor: **Ando, Masao**
**6-13, Shinoharakita 1-chome Kohokuku**
**Yokohamashi Kanagawaken (JP)**

(74) Representative: **Lawson, David Glynne et al,**
**MARKS & CLERK 57-60 Lincoln's Inn Fields**
**London WC2A 3LS (GB)**

Courier Press, Leamington Spa, England.

### Pipelines heated in skin-effect current

This invention relates to pipeline assemblies formed by a heat-generating pipe utilizing skin-effect current (which will be hereinafter referred to as a SECT pipe) and a fluid transporting pipe heated by the former to maintain the temperature of the latter.

Heat generating pipes which utilize skin-effect current (which will be referred to in this specification as SECT pipe) comprise a ferromagnetic pipe, e.g. of steel, an insulated electric wire passed therethrough, and a circuit such that when a first alternating current is caused to flow through the above-mentioned electric wire, a second alternating current is caused to flow in the pipe in the opposite direction in response to the first, in such a manner that current is concentrated in the vicinity of the inner surface of the ferromagnetic pipe. There are two broad kinds of circuit for such a SECT pipe. In the circuit of the first kind, the ferromagnetic pipe and the insulated electric wire passed therethrough are each electrically connected to at one end an electric source, thereof, and are electrically connected to each other at the respective other ends, as disclosed in U.S. Patent No. 3,293,407. In the circuit of the second kind, both ends of the insulated electric wire are electrically connected to an alternating current electric source to form a closed circuit, and the two ends of the ferromagnetic pipe are electrically connected to each other to form a closed circuit of as low an impedance as possible, as disclosed in U.S. Patent No. 3,515,837. Although the SECTs pipe referred to in the above-mentioned U.S. patents require a definite limitation to the thickness of the ferromagnetic pipe, it is possible according to the present invention to alleviate such a limitation.

In the SECT pipes, whether of the first kind or of the second, the cross-sectional shape of the ferromagnetic pipe is not limited only to a circular one, but may be e.g. triangular or a lunette. A portion of the wall of the above-mentioned ferromagnetic pipe may be constructed by the wall of the transporting pipe of ferromagnetic material to be heated. The above-mentioned ferromagnetic heating pipe may have intermediate breaks where the respective adjacent ends are electrically connected to each other. Further, the cross-sectional shape of the ferromagnetic pipe need not be a completely closed one, but may have a shape having a slit or slits. An example of such a ferromagnetic pipe has a circular cross-section but containing a longitudinal slit or slits, whereby it is possible to reduce the heat quantity generated at the portion of the ferromagnetic pipe corresponding to the length of the slit or slits. Another example is a ferromagnetic pipe wherein a member of ferromagnetic material having a cross-section of an inverted V shape is placed on a transporting pipe of ferromagnetic material and the limbs of the inverted V are stitch-welded to the surface of the transporting pipe.

In a SECT pipe of the first kind, alternating current is concentrated in the vicinity of the inner surface of the ferromagnetic pipe. The nearer to the inner surface of the pipe, the larger is the current density there. If the specific resistivity of the material of the ferromagnetic pipe is $\rho$ ($\Omega$ cm); the specific permeability thereof is $\mu$ ($\Omega.s.cm^{-1}$) and the frequency of the electric source is f (Hz), the skin depth S (cm), which is regarded as an index indicating the region in which the alternating current flows, is expressed by the following equation:

$$S = 5030 \sqrt{\frac{\rho}{\mu f}} \qquad (1)$$

Further, if the thickness of the ferromagnetic pipe is t (cm), its length is l (cm) and its inner diameter is d (cm), and these satisfy the relationships.

$$t > 2s \ (2); \quad l \gg d \ (3),$$

then the current does not flow uniformly through the cross-section of the ferromagnetic pipe, but flows in concentrated manner mostly in the inner skin region having a depth expressed by the above-mentioned equation (1). Thus, even when the outer region of the pipe is short-circuited with a good conductor such as metal, practically no current flows to this short-circuiting conductor, and the current flowing through the inner skin portion of the ferromagnetic pipe is nearly equal to the current in the wire or cable inside the pipe. Even when such a SECT pipe is connected by welding to a transporting pipe of metal over the total length, the current flowing out to the transporting pipe is extremely small.

Now, if a commercial frequency of 60 Hz or 50 Hz is employed for the electric source and a usual steel pipe is employed as the ferromagnetic pipe, the skin depth expressed by the equation (1) is about 1 mm. Thus, a thickness of the pipe 1 of 3 to 5 mm can satisfy the above-mentioned relation (2), and current flows in concentrated manner in the inner thin skin portion of the steel pipe where heat is generated; hence current substantially does not flow out to the outer portion of the pipe, whereby safety can be maintained.

If such a SECT pipe has an inner diameter of 10 to 50 mm, a current of 50 to 250 A is usually employed. Thus, since the voltage per 1 km amounts to about 500 V, a pipeline having a length of about 10 km requires 5 KV on average as the electric source voltage. Thus, if electricity is fed only through the two ends of the transporting pipe, the heatable length, in total, of the pipeline amounts to 20 km, i.e. twice the above-mentioned 10 km.

Accordingly, if the distance of feed of electricity is 20 km or longer, an insulated cable which endures 5 KV or higher is necessary. It is also necessary that the insulated cable endure the temperature at which the transporting pipe is maintained. Since such a temperature at which the pipe is maintained is, in general, higher than the atmospheric temperature, usual insulated cables cannot be employed and special heat-resistant, insulating materials are employed. This is expensive and thus uneconomical.

Recently, pipelines whose temperature is maintained by employing such a SECT pipe has been increasing in length, and such pipelines exceeding 100 km are not rare. In the case of such long pipelines installed on the surface, the above-mentioned problem has been solved by feeding electricity to the pipelines at intermediate positions, but in the case of such long pipelines installed on the seabed, since intermediate electricity feed is impossible, the feed must rely only on a high voltage cable, resulting in being extremely uneconomical or technically infeasible.

The object of the present invention is to solve the difficulties in such a case, and more particularly, to provide heated pipelines which are economical in use and commercially feasible in construction when laid over a long distance and alternating voltage applied to the SECT pipe has to be elevated up to e.g. as high as 5KV, particularly when the feed of electricity to the pipelines on the way is impossible as in case of those laid over a long distance underground or on the seabed.

The present invention resides in a pipeline to be heated by skin-effect current wherein at least one skin-effect current heat-generating pipe (18) is laid along a fluid-transporting pipe (12) of the pipeline and consists of a ferromagnetic pipe (1) and an insulated electric wire (2) passed therethrough, and has an electrical circuit such that, when an alternating current (5) is passed through said electric wire (2), an alternating current (5') flows in the ferromagnetic pipe (1) in the direction opposite to that of the current (5') in the wire (2) in response thereto, the current (5') in the pipe (1) being concentrated in the vicinity of the inner surface of said ferromagnetic pipe (1), characterised in that said pipeline additionally comprises an outer covering pipe (14) of a ferromagnetic material enclosing the outer periphery of said fluid-transporting pipe (12) and said heat-generating pipe (18), electrically connected to at least both the end portions (8, 9) of said ferromagnetic pipe (1); and the thickness of said outer covering pipe (14) is so selected in relation to the resistivity and permeability of the material of the pipe and the frequency of the alternating current used that an alternating current having leaked out of said skin-effect current heat-generating pipe (18) substantially does not appear on the outside of said outer covering pipe (14), but flows only through the inner skin portion of said outer covering pipe (14).

In the accompanying drawings:

Figure 1 shows a schematic cross-sectional view of a pipeline of the present invention in the direction of length; and

Figure 2 shows a schematic cross-sectional view of the pipeline of Figure 1 along the line II—II.

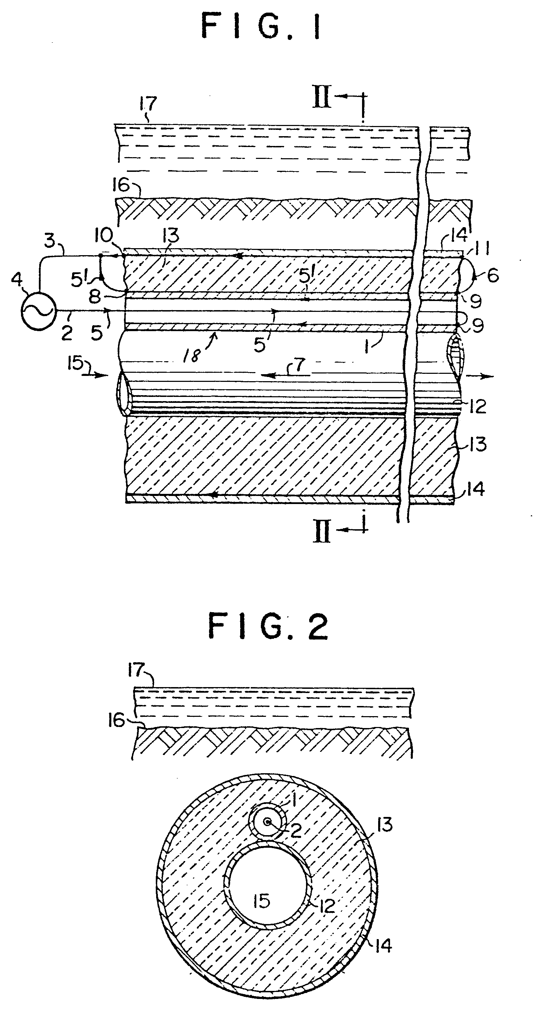

Figure 1 shows a ferromagnetic pipe 1 such as a steel pipe and an insulated electric wire or cable 2, passed therethrough. The wire 2, together with a connecting electric wire 3, connects both ends 8 and 9 of the pipe 1 to respective sides of an alternating current electric source 4, to form an alternating current circuit. A current 5 flows in the wire or cable 2, and a series current 5' flows in the inner skin region of the pipe 1.

A fluid-transporting pipe 12, as a main material constituting the pipeline, is traced with the ferromagnetic pipe 1 serving as a heat-generating pipe, the outside of the transporting pipe 12 being heat-insulated by a heat-insulating layer 13 which is further protected in water-proof manner by an outer covering pipe 14 of a ferromagnetic material (such as steel pipe). Numeral 15 refers to a fluid flowing through the inside of the transporting pipe. The pipeline thus constructed as a whole is embedded under the ground 16 or installed under the water surface 17.

Now, if the total length of the pipeline is 100 km and its heating pipe is in two portions, to which electricity is fed only at the two ends of the pipeline, then the distance over which electricity is fed is 50 km, and the electric source voltage is 25 KV in the case of 500 V per km as mentioned above. A high voltage, heat-resistant cable therefor is expensive and uneconomical, although its production is not always impossible. Thus, in order to avoid such a high voltage, it is necessary to reduce power input required for the pipeline or, if the power input is constant, to make the SECT pipe lower in resistance and hence lower in voltage or greater in current. However, since the temperature at which the transporting pipe 12 is maintained is constant, the only practical solution is to make the resistance of a SECT pipe lower. Since the skin depth, indicating the region in which alternating current flows, is expressed by S in the above-mentioned equation (1), the resistance R ($\Omega$) of the ferromagnetic pipe 1 is expressed by the following equation (4):

$$R = \rho \frac{l}{\pi \, ds} = \frac{l\sqrt{\mu f \rho}}{5030\pi d} \qquad (4)$$

Since the length l of the ferromagnetic pipe 1 i.e. the length I of the pipeline, is constant and the material of the ferromagnetic pipe 1 is constant, R can be reduced only by reducing the frequency f of the electric source or inceasing the inner diameter d of the ferromagnetic pipe 1. Although an increase in the inner diameter d is, of course, possible, too large an incrase requires an increase in the thickness of the heat-insulating layer 13, as can be seen from Figure 2, resulting in increasing the diameter of the outer layer steel pipe 14, which is uneconomical. Thus, it is seen that the increase in the inner diameter has limitations. Accordingly, the only means left is a reduction in the frequency f of the electric source.

However, as shown in equation (1), if f is reduced, s increases; hence it is necessary in view of the relationship (2) to increase the thickness $t_1$ of the ferromagnetic pipe 1, resulting in an increase of cost of the ferromagnetic pipe 1. In this regard, increase in the thickness has a definite limitation. The object of the present invention can be said, more particularly, to overcome such difficulties.

As shown in Figures 1 and 2, in the case of heat-insulated pipelines, an outer covering pipe 14 is usually employed for preventing a heat insulating layer 13 from external damage and making it water-proof. The pipe 14 is usually a plastic or steel pipe. In accordance with the present invention, the pipe 14 is a ferromagnetic pipe, and it is connected to carry part of the current. At least the two end portions 8 and 9 of the ferromagnetic pipe 1 are connected to the outer covering pipe 14, preferably at points 10 and 11 close to the above-mentioned end portions 8 and 9, respectively. Points between the end portions 8 and 9 may be connected to points between the points 10 and 11.

Further, if the frequency is reduced from a commercial one e.g. 60 Hz to about 15 Hz, it is seen from the equation (4) that the resistance R of the ferromagnetic pipe 1 is reduced down to 1/2, while the skin depth S increases to twice in view of the equation (1). Thus, for a ferromagnetic pipe of the same thickness $t_1$, the current appearing on the outer surface of the ferromagnetic pipe, of course, increases when the frequency is 15 Hz. If the transporting pipe 12 is a metallic pipe, the current 7 flowing out to the transporting pipe 12 as well as the current 6 flowing out to the outer covering pipe 14 connected to the ferromagnetic pipe 1 increase.

However, if the thickness $t_2$ of the outer cover pipe 14 satisfies the relationship (2) (i.e. $t_2 > 2S$), for example, in the case of f=15 Hz, as compared with the skin depth S calculated from the equation (1), then the out flowing current 6 substantially does not flow further to the outside of the outer covering pipe 14 e.g. to the earth.

Such a considerable thickness $t_2$ is generally required for the outer covering pipe 14, not only for preventing current from flowing out, but in any case for protecting the pipe from external damage, external pressure and corrosion, the relationship of the equation (2) exists without so large an increase in the thickness even in the case of a low frequency of about 15 Hz.

Further, the current 7 flowing out to the transporting pipe 12, even when it flows out, serves the purpose of heating, as it is, whereas the current 6 flowing out to the outer covering pipe causes a heat loss. However, even on the assumption that a current i flows out by 10%, since the inner diameter $d_2$ of the outer covering pipe 14 has the following relationship relative to the inner diameter $d_1$ of the ferromagnetic pipe 1:

$$d_2 >> d_1 \qquad (5),$$

it is seen by referring to the equation (4) that the resistance of the outer covering pipe 14 is extremely small, and hence the power loss $i^2 R$ is far smaller than 1%.

In the structure of the present invention as mentioned above, it is very easy, in the case of a pipeline having a length of 100 km and feed of electricity to both ends thereof, to reduce its electric source voltage from the usual value 25 KV down to 10 KV or lower, and yet there is almost no reduction in the heating efficiency.

It is true that a special source of low frequency is usually required. But, e.g. in the case of a heat-insulated pipeline having a length of 100 km, the heating power required therefor is usually 6—10 MVA (dependent on the diameter of the transporting pipe and the temperature at which the pipeline is maintained), and thus, even when a special generator and a special frequency-converter are provided, the cost required therefor is only a few % or less of the total initial cost; hence such means are very economical compared with a heat-resistant, special cable for high voltage whose cost can amount to 10% to several tens % of the total initial cost.

The above description refers to the case where the transporting pipe 12 is a good conductor such as steel pipe. In such a case, it has been known as a result of practical use that, by connecting the ferromagnetic pipe 1 to the transporting pipe 12 in electrically integral manner, only a slight flowing-out current 7 occurs, but, instead the residual voltage of the outer skin of the ferromagnetic pipe 1 decreases down to nearly zero, resulting in increased safety. On the other hand, if the transporting pipe 12 is of an insulating material such as plastics, no flowing-out current 7 is present and hence the residual voltage of the outer skin of the ferromagnetic pipe 1 does not decrease. However, the ferromagnetic outer covering pipe 14 reduces the residual voltage of the outer skin of the ferromagnetic pipe 1, and contributes to safety. This has a particularly large effectiveness for a long pipeline, e.g. 100 km as illustrated herein, since such a pipeline has a high residual voltage.

The electric source voltage to be applied in the present invention is usually preferred to have a frequency in the range of about 3 to 30 Hz.

The above description refers to a case where one ferromagnetic pipe is fixed to the transporting pipe 12, i.e. a single phase circuit. However, the apparatus of the present invention can be also constructed in the case of a two-phase or three-phase circuit, which will be readily apparent to one of ordinary skill in the art.

## Claims

1. A pipeline to be heated by skin-effect current wherein at least one skin-effect current heat-generating pipe (18) is laid along a fluid-transporting pipe (12) of the pipeline and consists of a ferromagnetic pipe (1) and an insulated electric wire (2) passed therethrough, and has an electrical circuit such that when an alternating current (5) is passed through said electric wire (2), an alternating current (5′) flows in the ferromagnetic pipe (1) in the direction opposite to that of the current (5) in the wire (2) in response thereto, the current (5′) in the pipe (1) being concentrated in the vicinity of the inner surface of said ferromagnetic pipe (1), characterised in that said pipeline additionally comprises an outer covering pipe (14) of a ferromagnetic material enclosing the outer periphery of said fluid-transporting pipe (12) and said heat-generating pipe (18), electrically connected to at least both the end portions (8, 9) of said ferromagnetic pipe (1); and the thickness of said outer covering pipe (14) is so selected in relation to the resistivity and permeability of the material of the pipe and the frequency of the alternating current used that an alternating current having leaked out of said skin-effect current pipe (18) substantially does not appear on the outside of said outer covering pipe (14), but flows only through the inner skin portion of said outer covering pipe (14).

2. A pipeline according to claim 1 characterised in that the thickness of said outer covering pipe (14) satisfies the following equation:

$$t > 2S$$

$$S = 5030 \sqrt{\frac{\rho}{\mu f}}$$

wherein t represents the thickness in centimetres of said outer covering pipe; S is the skin depth in cm. of an alternating current flowing in concentrated manner in the region close to the inner surface of said outer covering pipe; $\rho$ is the specific resistivity of said outer covering pipe in $\Omega$ cm; $\mu$ is the specific permeability in $\Omega$.s.cm$^{-1}$ of said outer covering pipe in operation; and f is the frequency in Hz of the electric current source for said skin-effect current heat-generating pipe.

3. A pipeline according to claim 1 or claim 2 characterised in that the frequency of the electric current source for said skin-effect current heat-generating pipe is less than 60 Hz.

4. A pipeline according to claim 3 characterised in that said frequency of the electric current source for said skin-effect current heat-generating pipe is in the range of 3 to 30 Hz.

## Revendications

1. Un pipe-line destiné à être chauffé par un courant à effet de peau dans lequel au moins une conduite (18) génératrice de chaleur par courant à effet de peau est posée le long de la conduite (12) de transport de fluide du pipe-line et comporte une conduite ferromagnétique (1) et un fil électrique isolé (2) passant à travers ladite conduite, et possède un circuit électrique tel que quand un courant alternatif (5) passe à travers ledit fil électrique (2) un courant alternatif (5′) s'écoule dans la conduite ferromagnétique (1) dans la direction opposée à celle du courant (5) dans le fil (2) en réponse à ce dernier courant, le courant (5′) dans la conduite était concentré au voisinage de la surface intérieure de ladite conduite ferromagnétique (1), caractérisée en ce que ledit pipe-line comprend en outre une conduite extérieure (14) formant enceinte en matériau ferromagnétique qui entoure la périphérie extérieure de la conduite de transport de fluide (12) et ladite conduite génératrice de chaleur (18) et est électriquement connectée à au moins les deux portions d'extrémité (8, 9) de ladite conduite (1), et l'épaisseur de ladite conduite extérieure (14) formant enceinte est choisie en fonction de la résistivité et de la perméabilité du matériau de cette conduite et de la fréquence du courant alternatif utilsé de façon que le courant alternatif ayant fui de la conduite (18) à courant à effet de peau (18) n'apparaisse pas de façon substantielle à l'extérieur de la conduite (14) formant enceinte mais s'écoule uniquement à travers la partie à effet de peau de ladite conduite extérieure (14) formant enceinte.

2. Un pipe-line conforme à la revendication 1, caractérisé en ce que l'épaisseur de ladite conduite extérieure formant enceinte satisfait les équations suivantes:

$$t > 25$$

$$S = 5030 \sqrt{\rho/\mu f}$$

dans lesquelles t est l'épaisseur en centimètres de ladite conduite extérieure formant enceinte, S est la profondeur de l'effet de peau en cm. pour un courant alternatif s'écoulant de façon concentrée dans le rayon proche de la surface intérieure de ladite conduite extérieure formant enceinte, $\rho$ est la résistivité spécifique de ladite conduite extérieure formant enceinte en ohms-centimètres et $\mu$ est la perméabilité spécifique de ladite conduite extérieure formant enceinte en ohms.secondes.par cm et f est la fréquence en Hz de la source de courant électrique pour ladite conduite génératrice de chaleur de courant à effet de peau.

3. Un pipe-line conforme à la revendication 1 ou à la revendication 2, caractérisé en ce que la fréquence de la source de courant électrique pour ladite conduite génératrice de chaleur à courant à effet de peau est moindre que 60 Hz.

4. Un pipe-line conforme à la revendication 3, caractérisé en ce que ladite fréquence de la source de courant électrique pour ladite conduite génératrice de chaleur à courant à effet de peau est dans la gamme de 3 à 30 Hz.

**Patentansprüche**

1. Rohrstrang mit Stromverdrängunsheizung nach dem Skin-Effekt, wobei wenigstens ein StromverdrängungsHeizrohr (18) längs eines Fluidtransportrohres (12) des Rohrstranges verlegt ist, aus einem ferromagnetischen Rohr (1) und einem sich durch das ferromagnetische Rohr erstreckenden, isolierten, elektrischen Draht (2) besteht und eine derartige elektrische Schaltung aufweist, daß bei Wechselstromfluß (5) durch den Draht (2) ein Wechselstrom (5') in dem ferromagnetischen Rohr (1) in entgegengesetzter Richtung zu dem Wechselstromfluß (5) im Draht (2) in dessen Abhängigkeit fließt, wobei der Wechselstrom (5') im Rohr (1) in der Nähe der Innenfläche des ferromagnetischen Rohres (1) konzentriert is, dadurch gekennzeichnet, daß der Rohstrang zusätzlich ein äußeres Schutzrohr (14) aus ferromagnetischem Material aufweist, welches die Außenperipherie des Fluidtransportrophes (12) sowie des Heizrohres (18) umschließt und mit wenigstens beiden Endabschnitten (8, 9) des ferromagnetischen Rohres (1) elektrisch verbunden ist; und daß die Dicke des Schutzrohres (14) in Relation zum spezifischen Widerstand und der Permeabilität des Rohr-Werkstoffes und der Frequenz des benutzten Wechselstromes so gewählt ist, daß ein aus dem Heizrohr (18) leckender Wechselstrom an der Außenseite des Schutzrohres (14) in wesentlichen nicht auftritt, sondern lediglich durch den Innenhautabschnitt des Schutzrohres (14) fließt.

2. Rohrstrang nach Anspruch 1, dadurch gekennzeichnet, daß die Stärke des Schutzrohres (14) der folgenden Gleichung genügt:

$$t > 2S$$

$$S = 5030 \sqrt{\frac{\rho}{\mu f}}$$

wobei t die Stärke in cm des Schutzrohres, S die Hauttiefe in cm eines konzentriert in dem Gebiet fließenden Wechselstromes ist, das nahe der Innenfläche des Schutzrohres ist, $\rho$ der spezifische Widerstand des Schutzrohres in $\Omega$ cm, $\mu$ die spezifische Permeabilität in $\Omega$ pro cm des Schutzrohres und f die Frequenz in Hz der Wechselstromquelle für das Heizrohr sind.

3. Rohrstrang nach Anspruch 1 oder 2, dadurch gekennzeichnet, daß die Frequenz der Wechselstromquelle für das Heizrohr kleiner als 60 Hz ist.

4. Rohrstrang nach Anspruch 3, dadurch gekennzeichnet, daß die Frequenz der Wechselstromquelle für das Heizrohr im Bereich von 3 bis 30 Hz liegt.

# FIG. 1

# FIG. 2